# EUROPÄISCHE PATENTSCHRIFT

(11) **EP 0 632 761 B1**
(45) Veröffentlichungstag und Bekanntmachung des Hinweises auf die Patenterteilung: **05.03.1997**
(21) Anmeldenummer: 94904614.8
(22) Anmeldetag: 30.12.1993
(51) Int. Cl.: B29C 67/00

(54) **VERFAHREN UND VORRICHTUNG ZUM HERSTELLEN EINES DREIDIMENSIONALEN OBJEKTS**
PROCESS AND DEVICE FOR MANUFACTURING THREE-DIMENSIONAL OBJECTS
PROCEDE ET DISPOSITIF DE PRODUCTION D'OBJETS TRIDIMENSIONNELS

(30) Priorität: 11.01.1993 DE 4300478
(43) Veröffentlichungstag der Anmeldung: 11.01.1995
(73) Patentinhaber: EOS GmbH ELECTRO OPTICAL SYSTEMS, 82152 Planegg (DE)
(72) Erfinder: RETALLICK, Dave, D-86505 Münsterhausen (DE); REICHLE, Johannes, D-81375 München (DE); LANGER, Hans, J., D-82166 Gräfelfing (DE)
(74) Vertreter: Prüfer, Lutz H., Dipl.-Phys.
(86) Internationale Anmeldenummer: EP9303725
(87) Internationale Veröffentlichungsnummer: WO9415771

(56) Entgegenhaltungen:
- EP-A- 0 322 257
- WO-A-90/03893
- WO-A-92/08592

## Beschreibung

Die Erfindung betrifft ein Verfahren zum Herstellen eines dreidimensionalen Objekts nach dem Oberbegriff des Anspruchs 1 bzw. eine Vorrichtung zur Durchführung eines derartigen Verfahrens nach dem Oberbegriff des Anspruchs 9.

Ein derartiges Verfahren ist beispielsweise aus der US 4 863 538 bekannt. Hier wird als Material ein pulverförmiges Feststoffmaterial verwendet, das auf die Oberseite eines absenkbaren Kolbens schichtweise aufgetragen und mittels eines Lasers an den dem Objekt entsprechenden Stellen gesintert wird. Der Kolben wird zur Bildung der aufeinanderfolgenden Schichten schrittweise in einem Zylinder abgesenkt, der das pulverförmige Material umschließt. Eine Heizung hält das Material auf einer für die Sinterung erforderlichen Betriebstemperatur von etwa 150°C.

Bei diesem bekannten Verfahren treten die Nachteile auf, daß zusammen mit dem Material auch der Zylinder auf die Betriebstemperatur geheizt werden muß, was eine Vorwärmzeit von 2 bis 3 Stunden bedingt. Ferner muß vor der Entnahme des Objekts aus dem Zylinder eine langsame Abkühlung auf unter 100°C durchgeführt werden, um eine Staubexplosionsgefahr zu vermeiden. Während dieser Abkühlzeit muß das Objekt im Zylinder verbleiben. Allgemein ergeben sich damit bei dem bekannten Verfahren lange Auf- und Abrüstzeiten und damit lange Herstellungszeiten. Dieser Nachteil soll mit der Erfindung beseitigt werden.

Aus der EP-A- 0322 257 ist ein Verfahren nach dem Oberbegriff des Anspruchs 1 und eine Vorrichtung nach dem Oberbegriff des Anspruchs 9 bekannt. Aus der WO 90/03893 und der WO 92/08592 ist jeweils eine Vorrichtung und ein eine Verfahren zum Herstellen eines dreidimensionalen Objektes bekannt, bei dem das Objekt schichtweise dadurch erzeugt wird, daß jeweils eine Schicht aus durch Bestrahlen mit elektromagnetischer Strahlung verfestigbarem Material aufgetragen und anschließend an den dem Objekt entsprechenden Stellen durch Bestrahlen verfestigt wird. Das Material wird dabei von einer Unterlage getragen, die zur Bildung der aufeinanderfolgenden Schichten schrittweise in einem Behälter abgesenkt wird, der das Material umschließt.

Erfindungsgemäß wird die zuvor genannte Aufgabe durch die Merkmale des Anspruchs 1 bzw. die Merkmale des Anspruchs 9 gelöst. Da erfindungsgemäß die dem herkömmlichen Zylinder entsprechende Behälterwand zusammen mit dem Objekt erzeugt wird, entfällt ein Vorheizen des Zylinders und damit die lange Aufrüstzeit. Nach der Fertigstellung des Objekts kann die Behälterwand, die kein Teil der Vorrichtung ist, zusammmen mit dem Objekt zur gezielten Abkühlung aus der Vorrichtung entnommen werden, sodaß auch die lange Abkühlzeit in der Vorrichtung und damit die Abrüstzeit entfällt.

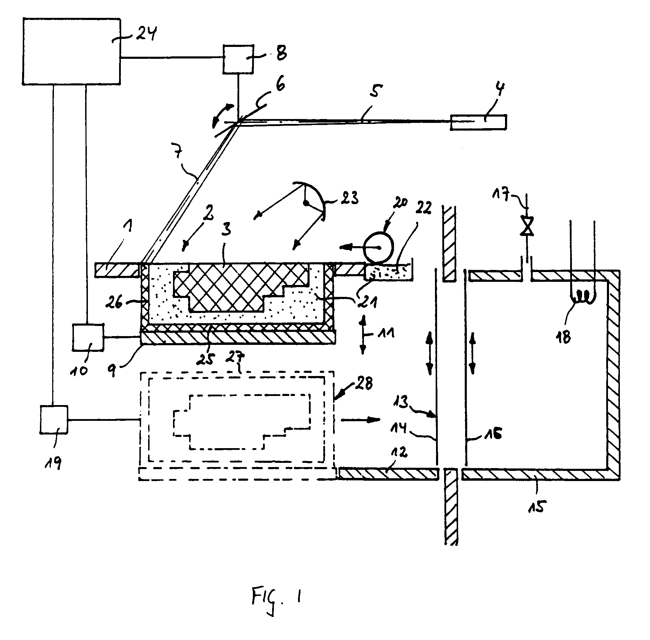

Die Erfindung soll im weiteren anhand eines Ausführungsbeispiels unter Bezug auf die Figur beschrieben. Die Figur zeigt eine schematische Darstellung der erfindungsgemäßen Vorrichtung im Schnitt.

Die Vorrichtung weist einen im wesentlichen horizontal angeordneten Arbeitstisch 1 mit einem Loch in Form eines Ausschnittes 2 auf. Der Ausschnitt 2 ist vorzugsweise kreisförmig mit einem Querschnitt, der größer ist als die größte Querschnittsfläche des herzustellenden Objekts 3. Der Ausschnitt 2 kann jedoch auch jede andere geeignete Form aufweisen. Oberhalb des Arbeitstisches 1 ist eine Bestrahlungseinrichtung 4, beispielsweise ein Laser, angeordnet, die einen gerichteten Lichtstrahl 5 abgibt. Dieser wird über eine Ablenkeinrichtung 6, beispielsweise einen Drehspiegel, als abgelenkter Strahl 7 auf die Ebene des Arbeitstisches 1 abgelenkt. Eine Steuerung 8 steuert die Ablenkeinrichtung derart, daß der abgelenkte Strahl 7 auf jede gewünschte Stelle innerhalb des vom Ausschnitt 2 definierten Arbeitsbereiches auftrifft.

Unterhalb des Ausschnittes 2 ist eine ebenfalls im wesentlichen horizontal angeordnete Unterlage 9 in Form einer Plattform vorgesehen, die als seitlich geführter Tisch mit einer dem Ausschnitt 2 entsprechenden Form ausgebildet ist und mittels einer ebenfalls seitlich angeordneten Höheneinstellvorrichtung 10 in Richtung des Pfeils 11 zwischen einer höchsten Stellung, in der die Oberfläche der Unterlage innerhalb des Ausschnittes 2 und im wesentlichen in derselben Höhe wie die Oberfläche des Arbeitstisches 1 liegt, und einer in der Figur gestrichelt angedeuteten tiefsten Stellung, in der die Unterlage 9 soweit abgesenkt ist, daß ihre Oberfläche in einer Ebene mit einer angrenzenden Aufnahmeplatte 12 liegt, verschiebbar ist. Der Abstand zwischen der Aufnahmeplatte und dem Arbeitstische, also der Höhenverstellbereich der Unterlage, ist dabei größer als die maximale Höhe des Objekts 3.

Angrenzend an die Aufnahmeplatte 12 weist die Vorrichtung eine Öffnung 13 auf, die mittels einer Tür 14 dicht verschließbar ist. Es ist ein Entnahmebehälter 15 vorgesehen, der auf der der Aufnahmeplatte 12 gegenüberliegenden Seite der Öffnung 13 an die Öffnung dicht anschließbar bzw. andockbar ist. Der Entnahmebehälter 15 weist ebenfalls eine Tür 16 zum dichten Verschließen des Behälters 15 auf und ist mit einer Zufuhrvorrichtung 17 für Inertgas, beispielsweise Stickstoff, sowie mit einer Heizung 18 versehen.

Eine Ausgabe- bzw. Ausschubvorrichtung 19 beispielsweise in Form eines seitlich angebrachten Schiebers oder dgl. ist so ausgebildet und angeordet, daß sie in der tiefsten Stellung der Unterlage 9 das auf dieser ruhende Objekt von der Unterlage 9 auf die Aufnahmeplatte 12 und durch die (geöffneten) Türen 14,16 in den Entnahmebehälter 15 verschieben kann.

Eine Vorrichtung 20 zum Aufbringen einer Schicht eines pulverförmigen Materials 21 ist in an sich bekannter Weise als Walze ausgebildet, die horizontal über den Arbeitstisch 1 von einer Stellung, in der das Material 21 von einem Vorrat 22 auf die Oberfläche der Walze aufgebracht wird, über den Ausschnitt 2 bewegbar ist. Als Material 21 kommt insbesondere niedrigschmelzendes Kunststoffmaterial wie beispielsweise Nylon mit Korngrößen von ca. 10 µm und geringer, aber auch Metallpulver oder Hybride, d.h. kunststoffüberzogene Metall- oder Keramikpulver, in Frage. Ferner ist oberhalb des Ausschnitt 2 eine auf den Arbeitsbereich gerichtete Strahlungsheizung 23 angeordnet.

Die Steuerung 8, die Höheneinstellvorrichtung 10 und die Ausgabevorrichtung 19 sind jeweils mit einer zentralen Steuereinheit 24 zur koordinierten Steuerung dieser Vorrichtungen in der nachfolgend beschriebenen Weise verbunden.

Im Betrieb wird zunächst die Unterlage 9 mittels der Höheneinstellvorrichtung 10 in die höchste Stellung gefahren, in der die Oberfläche der Unterlage 9 in einer Ebene mit der Oberfläche des Arbeitstisches 1 liegt, und anschließend um den Betrag der vorgesehenen Dicke der ersten Materialschicht abgesenkt, sodaß innerhalb des Ausschnitts 2 ein abgesenkter Bereich gebildet ist, der seitlich von den Wänden des Ausschnitts 2 und unten von der Oberfläche der Unterlage 9 begrenzt ist. Mittels der Walze 20 wird sodann eine erste Schicht des Materials 21 mit der vorgesehenen Schichtdicke in den vom Ausschnitt 2 und der Unterlage 9 gebildeten Hohlraum bzw. den abgesenkten Bereich eingebracht und von der Heizung 23 auf eine geeignete Arbeitstemperatur, beispielsweise 140°C bis 160°C, erwärmt. Daraufhin steuert die Steuereinheit 24 die Ablenkeinrichtung 6 über deren Steuerung 8 derart, daß der abgelenkte Lichtstrahl 7 nacheinander an allen Stellen der Schicht auftrifft und dort das Material 21 durch Sintern verfestigt. Auf diese Weise wird zunächst eine feste Bodenschicht 25 gebildet.

In einem zweiten Schritt wird die Unterlage 9 mittels der Höheneinstellvorrichtung 10 von der Steuereinheit 24 um den Betrag einer Schichtdicke abgesenkt und mittels der Walze 20 in den damit entstehenden abgesenkten Bereich innerhalb des Ausschnittes 2 eine zweite Materialschicht eingebracht und wiederum von der Heizung 23 erwärmt. Die Ablenkeinrichtung 6 wird diesmal von der Steuereinheit 24 derart gesteuert, daß der abgelenkte Lichtstrahl 7 nur auf dem an die Innenfläche des Ausschnittes 2 angrenzenden Bereich der Materialschicht auftrifft und dort die Materialschicht durch Sintern verfestigt, wodurch eine erste ringförmige Wandschicht mit einer Wandstärke von etwa 2 bis 10mm entsteht, die das verbleibende pulverförmige Material der Schicht vollständig umgibt.

Nach Absenken der Unterlage 9 um den Betrag der Schichtdicke der nächsten Schicht, Aufbringen des Materials 21 und Aufheizen in der gleichen Weise wie oben kann nun die Herstellung des Objekts 3 selbst beginnen. Hierzu steuert die Steuereinheit 24 die Ablenkeinrichtung 6 derart, daß der abgelenkte Lichtstrahl 7 an solchen Stellen der Schicht auftrifft, die entsprechend den in der Steuereinheit 24 gespeicherten Koordinaten des Objekts 3 verfestigt werden sollen. Nach oder vor der Herstellung dieser Objektschicht wird auf der ersten ringförmigen Wandschicht in gleicher Weise wie oben beschrieben eine zweite ringförmige Wandschicht derselben Wandstärke aufgesintert.

Bei den weiteren Schichten wird analog vorgegangen. Dadurch, daß bei der Herstellung jeder Objektschicht eine ringförmige Wandschicht auf die darunterliegende ringförmige Wandschicht aufgesintert wird, entsteht ein ringförmiger Wandbereich 26 in Form einer Behälterwand, die das Objekt 3 zusammen mit dem verbleibenden, nicht gesinterten Material 21 umschließt und so beim Absenken der Unterlage 9 unter den Arbeitstisch 1 ein Austreten des Materials 21 verhindert.

Nach Fertigstellung der letzten Objektschicht wird wiederum entsprechend dem oben beschriebenen zweiten Schritt nur eine ringförmige Wandschicht verfestigt und danach in derselben Weise wie bei der Herstellung der Bodenschicht 25 eine Deckelschicht 27 verfestigt, die zusammen mit der Bodenschicht 25 und dem Wandbereich 26 einen das Objekt 3 und das verbleibende ungesinterte Material dicht einschließenden Behälter 28 bildet.

Danach wird die Unterlage mittels der Höheneinsteilvorrichtung 10 in der in der Figur gestrichelt angedeuteten Weise auf die Höhe der Aufnahmeplatte 12 abgesenkt und ein vorher unter Stickstoffatmosphäre auf eine Temperatur von ebenfalls etwa 140-160°C aufgeheizter Entnahmebehälter 15 wird an die Ausgabeöffnung 13 angeschlossen. Nach Öffnen der Türen 14,16 wird die Ausgabevorrichtung so betätigt, daß sie den Behälter 28 durch die Öffnung 13 in den Entnahmebehälter 15 schiebt. Nach Schließen der Türen 14 und 16 kann der Entnahmebehälter 15 entfernt und ohne weitere Wartezeit ein neues Objekt hergestellt werden. Die erforderliche langsame Abkühlung des Objekts 3 erfolgt in dem Entnahmebehälter 15 durch entsprechende Steuerung der Heizung 18 unabhängig von der Herstellung des nächsten Objekts.

Während der Herstellung des Objekts 3 wird ebenfalls im Arbeitsbereich über an sich bekannte (nicht gezeigte) Mittel eine Inertgasatmosphäre, vorzugsweise eine Stickstoffatmosphäre, erzeugt. Aufgrund der schleusenartigen Ausbildung der Türen 14, 16 wird ein Entweichen dieser Atmosphäre bei Ausgabe des fertigen Objekts 3 und damit eine Unterbrechung des Herstellungsbetriebs vermieden.

Modifikationen der Erfindung sind möglich. So kann die Herstellung der Bodenschicht 25 entfallen; auch die Deckelschicht 27 ist dann nicht erforderlich, wenn eine sichere Abkühlung auch des dann freiliegenden Restpulvers im Entnahmebehälter 15 unter Schutzgas möglich ist; andererseits kann bei Herstellung beider Schichten 25,27 und damit des dichten Behälters 28 eventuell die Abkühlung auch ohne Entnahmebehälter 15 bzw. ohne Schutzgasatmosphäre durchgeführt werden; die Aufbringvorrichtung 20 kann außer als Walze auch als Streu- oder Streichvorrichtung, als Schieber, Besen, Wischer oder in jeder zum Aufbringen einer gleichmäßigen Schicht aus pulverförmigem Material geeigneten Weise ausgebildet sein; die Heizungen 18,23 können als Strahlungs- und/oder Umluftheizungen ausgebildet sein und für die Bestrahlungseinrichtung kann jede andere Strahlungsquelle für elektromagnetische Strahlung, die einen gerichteten Strahl mit zur Sinterung ausreichender Energie abgibt, wie beispielsweise eine Lichtquelle oder auch eine Elektronenstrahlquelle verwendet werden. Ferner kann anstelle von pulverförmigem Material auch flüssiges Material verwendet werden. Schließlich muß die die Behälterwand bildende verfestigte Wandschicht nicht kreisringförmig sein, sondern kann jede beliebige Form einer im wesentlichen geschlossenen Kurve aufweisen. Vorzugsweise entspricht diese Form jedoch der Form des Ausschnitts 2.

## Patentansprüche

1. Verfahren zum Herstellen eines dreidimensionalen Objekts, bei dem das Objekt (3) schichtweise dadurch erzeugt wird, daß jeweils eine Schicht aus durch Bestrahlen mit elektromagnetischer Strahlung verfestigbarem Material (21) aufgetragen und anschließend an den dem Objekt (3) entsprechenden Stellen durch Bestrahlen verfestigt wird, wobei zur Erzeugung einer Behälterwand (26) für das Material in jeder Schicht ein das Objekt (3) umschließender Bereich des Materials bestrahlt und damit verfestigt wird, dadurch gekennzeichnet, daß in einen Ausschnitt (2) in einem Arbeitstisch (1) eine Materialschicht definierter Dicke eingebracht wird und daß die Behälterwand (26) durch Bestrahlen des an die Innenwand des Ausschnittes (2) angrenzenden Materialbereichs erzeugt wird, sodaß die Materialschicht von der Behälterwand (26) umschlossen wird.

2. Verfahren nach Anspruch 1,
dadurch gekennzeichnet, daß als Material (21) ein pulverförmiges Feststoffmaterial verwendet wird und die Bestrahlung derart durchgeführt wird, daß das Feststoffmaterial an den bestrahlten Stellen zusammensintert.

3. Verfahren nach Anspruch 1 oder 2,
dadurch gekennzeichnet, daß in jeder Schicht ein entsprechender ringförmiger Bereich verfestigt wird, so daß eine zylindrische Behälterwand (26) erzeugt wird.

4. Verfahren nach einem der Ansprüche 1 bis 3,
dadurch gekennzeichnet, daß die Materialschicht auf eine Unterlage (9) aufgebracht wird, die in ihrer höchsten Stellung zumindest teilweise innerhalb des Ausschnitts (2) angeordnet ist und zur Bildung jeder Schicht um einen der Dicke dieser Schicht entsprechenden Betrag nach unten abgesenkt wird.

5. Verfahren nach einem der vorhergehenden Ansprüche,
dadurch gekennzeichnet, daß vor und/oder nach Erzeugung der Behälterwand (26) und des Objekts (3) eine Materialschicht über die ganze vom Bereich der Behälterwand umschlossene Fläche verfestigt wird, sodaß ein geschlossener Boden (25) bzw. ein geschlossener Deckel (27) für den Behälter (28) erzeugt wird.

6. Verfahren nach einem der vorhergehenden Ansprüche,
dadurch gekennzeichnet, daß die Behälterwand (26) mit dem davon umschlossenen Objekt (3) nach Fertigstellung in einen Entnahmebehälter (15) gebracht und dort unter kontrollierten Bedingungen abgekühlt wird.

7. Verfahren nach einem der vorhergehenden Ansprüche,
dadurch gekennzeichnet, daß die Erzeugung des Objekts (3) in einer Inertgasatmosphäre erfolgt.

8. Verfahren nach einem der vorhergehenden Ansprüche,
dadurch gekennzeichnet, daß zur Bestrahlung ein gesteuerter Laserstrahl (7) verwendet wird.

9. Vorrichtung zur Durchführung des Verfahrens nach Anspruch 1,
mit einer höheneinstellbaren Unterlage (9), einer Vorrichtung (20) zum Aufbringen einer Schicht eines durch Einwirkung elektromagnetischer Strahlung verfestigbaren Materials (21) auf die Unterlage (9), einer
Bestrahlungseinrichtung (4) und einer Steuerung (8, 24) für die Bestrahlungseinrichtung (4) zum Bestrahlen von dem Objekt (3) entsprechenden Stellen der Schicht, dadurch gekennzeichnet, daß ein Arbeitstisch (1) mit einem Ausschnitt (2) vorgesehen ist und die Unterlage (9) in eine Position anhebbar ist, so daß innerhalb des Ausschnittes (2) ein abgesenkter Bereich gebildet ist, der seitlich von den Wänden des Ausschnittes und unten von einer Oberfläche der Unterlage (9) begrenzt ist und daß die Steuerung (8, 24) derart ausgebildet ist, daß sie in jeder Schicht einen das Objekt (3) umschließenden Bereich (26) des Materials (21) angrenzend an die Wände des Ausschnittes(2) bestrahlt.

10. Vorrichtung nach Anspruch 9,
dadurch gekennzeichnet, daß die Unterlage (9) in eine Position anhebbar ist, in der ihre Oberfläche innerhalb des Ausschnittes (2) im wesentlichen in einer Ebene mit der Oberfläche des Arbeitstisches (1) liegt.

11. Vorrichtung nach Anspruch 9 oder 10,
dadurch gekennzeichnet, daß die Unterlage (9) als seitlich oder von unten geführter Tisch mit einer seitlich davon angeordneten Höhenverstellvorrichtung (10) ausgebildet ist.

12. Vorrichtung nach Anspruch 10 oder 11,
dadurch gekennzeichnet, daß die Unterlage (9) in eine Position absenkbar ist, in der sie in einer Ebene mit einer seitlich anschließenden Aufnahmeplatte (12) liegt.

13. Vorrichtung nach Anspruch 12,
gekennzeichnet durch eine an der Behälterwand (26) angreifenden Ausgabevorrichtung (19) zum Verschieben des das Objekt umschließenden Behälters (28) von der Unterlage (9) auf die Aufnahmeplatte (12).

14. Vorrichtung nach Anspruch 12 oder 13,
gekennzeichnet durch eine verschließbare Öffnung (13) zur Ausgabe des das Objekt (3) umschließenden Behälters (28).

15. Vorrichtung nach Anspruch 14,
dadurch gekennzeichnet, daß ein Entnahmebehälter (15) vorgesehen ist, der an die verschließbare Öffnung (13) dicht anschließbar ist.

16. Vorrichtung nach Anspruch 15,
dadurch gekennzeichnet, daß der Entnahmebehälter (15) eine Schutzgaszufuhr, vorzugsweise eine Stickstoffzufuhr (17), sowie eine regelbare Heizung (18) aufweist.

17. Vorrichtung nach einem der Ansprüche 9 bis 16,
gekennzeichnet durch eine auf die Materialschicht gerichtete Strahlungsheizung (23).

## Claims

1. Process for manufacturing a three-dimensional object, in which the object (3) is produced layer-by-layer by respectively applying a layer of material (21) which can be made to set by irradiating with electromagnetic radiation and subsequently making it set at the appropriate locations for the object (3) by irradiating it, a container wall (26) for the material being produced in each layer by irradiating a region of the material enclosing the object (3) and thereby making it set, characterized in that a material layer of defined thickness is introduced into a cutout (2) in a workbench (1) and in that the container wall (6) is produced by irradiating the material region adjacent to the inner wall of the cutout (2), so that the material layer is enclosed by the container wall (26).

2. Process according to Claim 1, characterized in that a powdered solid material is used as the material (21) and the irradiation is carried out in such a way that the solid material sinters together at the irradiated locations.

3. Process according to Claim 1 or 2, characterized in that an appropriate annular region is made to set in each layer, so that a cylindrical container wall (26) is produced.

4. Process according to one of Claims 1 to 3, characterized in that the material layer is applied to an underlying support (9) which, in its highest position, is arranged at least partially within the cutout (2) and, for forming each layer, is lowered downwards by an amount corresponding to the thickness of this layer.

5. Process according to one of the preceding claims, characterized in that, before and after producing the container wall (26) and the object (3), a material layer is made to set over the entire area enclosed by the region of the container wall, so that a closed base (25) or a closed cover (27) is produced for the container (28).

6. Process according to one of the preceding claims, characterized in that, after completion, the container wall (26) with the object (3) enclosed by it is introduced into a removal container (15) and is cooled there under controlled conditions.

7. Process according to one of the preceding claims, characterized in that the object (3) is produced in an inert gas atmosphere.

8. Process according to one of the preceding claims, characterized in that a controlled laser beam (7) is used for the irradiation.

9. Device for carrying out the process according to Claim 1, having a height-adjustable underlying support (9), a device (20) for applying to the underlying support (9) a layer of a material (21) which can be made to set by exposure to electromagnetic radiation, an irradiating means (4) and a control system (8, 24) for the irradiating means (4) for irradiating appropriate locations of the layer for the object (3), characterized in that a workbench (1) with a cutout (2) is provided and the underlying support (9) can be raised into a position such that within the cutout (2) there is formed a lowered region which is bounded to the sides by the walls of the cutout and underneath by a surface of the underlying support (9) and in that the control system (8, 24) is designed in such a way that, in every layer, it irradiates a region (26) of the material (21) enclosing the object (3) and adjacent to the walls of the cutout (2).

10. Device according to Claim 9, characterized in that the underlying support (9) can be raised into a position in which its surface lies within the cutout (2) substantially in a plane with the surface of the workbench (1).

11. Device according to Claim 9 or 10, characterized in that the underlying support (9) is designed as a bench guided at the sides or from below and having a height-adjusting device (10) arranged to the side of it.

12. Device according to Claim 10 or 11, characterized in that the underlying support (9) can be lowered into a position in which it lies in a plane with a receiving plate (12) adjacent to the side.

13. Device according to Claim 12, characterized by a discharging device (19), acting on the container wall (26), for displacing the container (28) enclosing the object from the underlying support (9) onto the receiving plate (12).

14. Device according to Claim 12 or 13, characterized by a closable opening (13) for the discharge of the container (28) enclosing the object (3).

15. Device according to Claim 14, characterized in that there is provided a removal container (15), which can be connected right up against the closable opening (13).

16. Device according to Claim 15, characterized in that the removal container (15) has an inert gas supply, preferably a nitrogen supply (17), and also a variable-output heater (18).

17. Device according to one of Claims 9 to 16, characterized by a radiation heater (23) directed at the material layer.

## Revendications

1. Procédé de production d'un objet tridimensionnel dans lequel l'objet (3) est fabriqué couche par couche en ce qu'une couche en matière capable de durcir par l'irradiation avec un rayonnement électromagnétique (21) est appliquée et ensuite durcie aux zones correspondant à l'objet (3), une zone de la matière entourant l'objet (3) étant irradiée et ainsi durcie dans chaque couche pour la fabrication d'une paroi de récipient (26) pour la matière, caractérisé en ce qu'une couche de matière d'une épaisseur définie est mise dans une découpure (2) d'une table de travail (1) et que la paroi du récipient (26) est fabriquée par irradiation de la zone de matière adjacente à la paroi interne de la découpure (2), de façon que la couche de matière soit entourée par la paroi du récipient (26).

2. Procédé selon la revendication 1, caractérisé en ce qu'une matière solide en forme de poudre est utilisée comme matière (21) et que l'irradiation est réalisée de façon que la matière solide se fritte au niveau des zones irradiées.

3. Procédé selon la revendication 1 ou 2, caractérisé en ce que, dans chaque couche, une zone annulaire correspondante est durcie de façon à fabriquer une paroi de récipient (26) cylindrique.

4. Procédé selon l'une des revendications 1 à 3, caractérisé en ce que la couche de matière est appliquée sur un support (19) qui, dans sa position la plus haute, est disposé au moins partiellement à l'intérieur de la découpure (2) et qui, pour la formation de chaque couche, est abaissé d'une valeur correspondant à l'épaisseur de cette couche.

5. Procédé selon l'une des revendications précédentes, caractérisé en ce qu'avant et/ou après la fabrication de la paroi du récipient (26) et de l'objet (3), une couche de matière est durcie sur toute la surface entourée par la zone de la paroi du récipient, de façon qu'un fond fermé (25) ou un couvercle fermé (27) sont fabriqués pour le récipient (28).

6. Procédé selon l'une des revendications précédentes, caractérisé en ce que la paroi du récipient (26) avec l'objet (3) ainsi enfermé est amenée, après la fabrication, dans un récipient de retirement (15) où elle est refroidie dans des conditions contrôlées.

7. Procédé selon l'une quelconque des revendications précédentes, caractérisé en ce que la fabrication de l'objet (3) est effectuée dans une atmosphère de gaz inerte.

8. Procédé selon l'une quelconque des revendications précédentes, caractérisé en ce qu'un rayon laser (7) commandé est utilisé pour l'irradiation.

9. Dispositif pour la réalisation du procédé selon la revendication 1, avec un support (9) réglable en hauteur, un dispositif (20) pour l'application sur le support (9) d'une couche d'une matière (21) capable de durcir par l'action d'un rayonnement électromagnétique, un dispositif d'irradiation (4) et une commande (8, 24) pour le dispositif d'irradiation (4) pour l'irradiation des zones de la couche correspondant à l'objet (3), caractérisé en ce qu'une table de travail (1) avec une découpure (2) est prévue et que le support (9) peut être déplacé vers le haut dans une position telle qu'à l'intérieur de la découpure (2), une zone abaissée est formée qui est limitée latéralement par les parois de la découpure et en dessous par une surface du support (9) et que la commande (8, 24) est conçue de façon que dans chaque couche, elle irradie une zone (26) de la matière (21) enfermant l'objet (3) adjacente aux parois de la découpure (2).

10. Dispositif selon la revendication 9, caractérisé en ce que le support (9) peut être déplacé vers le haut dans une position dans laquelle sa surface se trouve pour l'essentiel dans un plan avec la surface de la table de travail (1) à l'intérieur de la découpure (2).

11. Dispositif selon la revendication 9 ou 10, caractérisé en ce que le support (9) est conçu comme une table amenée latéralement ou par en dessous avec un dispositif de réglage en hauteur (10) disposé latéralement par rapport à celle-ci.

12. Dispositif selon la revendication 10 ou 11, caractérisé en ce que le support (9) peut être déplacé vers le bas dans une position dans laquelle il se trouve dans un plan avec une plaque de réception latérale adjacente (12).

13. Dispositif selon la revendication 12, caractérisé par un dispositif de sortie (19) qui s'applique sur la paroi du récipient (26) pour déplacer le récipient (28) qui enferme l'objet, du support (9) vers la plaque de réception (12).

14. Dispositif selon la revendication 12 ou 13, caractérisé par une ouverture verrouillable (13) pour la sortie du récipient (28) renfermant l'objet (3).

15. Dispositif selon la revendication 14, caractérisé en ce qu'il est prévu un récipient de retirement (15) qui peut être raccordé hermétiquement à l'ouverture verrouillable (13).

16. Dispositif selon la revendication 15, caractérisé en ce que le récipient de retirement (15) présente une alimentation de gaz inerte, de préférence une alimentation d'azote (17) ainsi qu'un chauffage réglable (18).

17. Dispositif selon l'une des revendications 9 à 16, caractérisé par un chauffage à rayonnement (23) dirigé sur la couche de matière.
